# EUROPÄISCHE PATENTSCHRIFT

(11) **EP 3 058 245 B1**
(45) Veröffentlichungstag und Bekanntmachung des Hinweises auf die Patenterteilung: **06.05.2020**
(21) Anmeldenummer: 14795555.3
(22) Anmeldetag: 13.10.2014
(51) Int. Cl.: F16H 57/08, F16F 1/38, F16H 57/04

(54) **ELASTISCHE BUCHSE FÜR PLANETENLAGER**
ELASTIC BUSHING FOR A PLANETARY BEARING
DOUILLE ÉLASTIQUE POUR PALIER SATELLITE

(30) Priorität: 15.10.2013 EP 13004936
(43) Veröffentlichungstag der Anmeldung: 24.08.2016
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2014/002754
(87) Internationale Veröffentlichungsnummer: WO 2015/055291

(56) Entgegenhaltungen:
- EP-A1- 2 354 544
- WO-A1-2009/121552
- WO-A1-2012/119748
- US-A1- 2011 140 448

## Beschreibung

Die Erfindung betrifft eine vorspannbare elastische Buchse, welche durch entsprechende konstruktive Maßnahmen und Einrichtungen eine neuartige Dämpfung aufweist, um unerwünschte Schwingungen in Planetenlagern insbesondere Planetenrädern für Planetengetriebe zu eliminieren bzw. zu vermindern. Die Erfindung betrifft auch insbesondere die Verwendung derartiger Buchsen, Planetenrädern oder Planetengetrieben in Maschinenteilen und Anlagen, die nur geringe oder keine Momente übertragen, beispielsweise in Windkraftanlagen. So eine elastische Buchse ist aus der WO2012119748A bekannt. Bei einem Planetengetriebe laufen mehrere Planetenräder (in der Regel 3-4) innerhalb eines Hohlrades und rollen sich an der Verzahnung des Hohlrades ab. Diese treiben wiederum die sogenannte "Sonne" an. Dadurch lässt sich eine verhältnismäßig hohe Übersetzung erzielen. Beim Aufbringen des Antriebsmomentes verdreht sich in der Regel die vordere Scheibe des Planetenträgers gegen die hintere Scheibe desselben. Dadurch stellt sich die Achse der Planeten schief. Eine weitere Schiefstellung der Achse kann durch die Einleitung von Biegemomenten über die Eingangswelle und den Anschluss zur Eingangswelle erfolgen. Durch diese Schiefstellung des Planetenträgers bzw. des Planetengetriebes erfolgt eine ungleiche Lastenverteilung über die Länge der Planetenzahnräder. Um das ungleiche Tragen der Verzahnung zu vermeiden, ist es erforderlich, die Planeten elastisch auf ihren Achsen in kardanischer Richtung elastisch zu lagern. Die Lagerung muss am Umfang des Planetenlagers homogen sein.

Bei der im Idealfall kardanisch weicheren Lagerung richten sich die Planeten am Hohlrad und an der Sonne aus, so dass keine Schiefstellung der Verzahnung erfolgt. Die Planeten sollen ferner wünschenswerterweise innerhalb des- in der Regel - aus einem Teil bestehenden Planetenträgers montierbar sein. Gleichzeitig sollten oder müssen die Planeten-Wälzlager von innen durch eine in der Welle vorhandene Bohrung geschmiert werden, damit ein dauernder Betrieb des Planetenlagers gewährleistet ist.

Die herkömmlichen Planetenräder, Planetenlager und Planetengetriebe weisen keine oder nur übliche Dämpfungseinrichtungen auf, so dass alle genannten Lasten von den Einzelteilen der Räder, Lager und Getriebe aufgenommen und getragen werden müssen.

Die Aufgabe der Erfindung besteht nun darin, die Planetenräder speziell elastisch zu lagern, so dass die beschriebenen Probleme nicht mehr oder zumindest weniger auftreten.

Die Aufgabe wurde durch die erfindungsgemäße vorspannbare Buchse mit den Merkmalen des Anspruchs 1, gelöst.

Der mindestens eine Verdrängungsraum (9) ist vorzugsweise an der Grenzfläche zwischen Innenzylinder (7) und/oder Außenzylinder (8) angeordnet, und/oder, falls vorhanden, an einem Mittelblech (26) zwischen zwei elastischen Schichten (4). In einer Ausführungsform der Erfindung ist der Verdrängungsraum (9) zwischen der elastischen Schicht (4) und der inneren Wand des inneren zylindrischen Körpers (7) angeordnet. Er kann aber auch innerhalb einer elastischen Schicht (4) angeordnet sein. In diesem Fall müssen in einem bestimmten Bereich getrennte elastische Schichten vorliegen, oder aber die elastische Schicht muss schlitzartige Taschen aufweisen.

Erfindungsgemäß wird der Umströmungsraum (10) durch eine vorzugsweise elastische Abstandshülse (5) gebildet, die passgenau in den Innenzylinder (7) eingeschoben ist, und selbst für die passende Aufnahme der Welle oder Achse (11) vorgesehen ist. Die Hülse (5) weist dabei in bestimmten Zonen Kanäle, Aussparungen oder Hohlräume auf, die Verbindungen (25) zu den besagten Verdrängungsräumen (9) haben. Die Hülse (5) mit ihren Öffnungen kann somit auch als Abstützung zwischen Buchse und Welle/Achse verstanden werden.

In einer Ausführungsform der Erfindung ist die Schicht oder Abstandshülse (5) mit ihren Kanälen, Aussparungen und Hohlräumen integraler Bestandteil der Buchse (1) und umschlingt die Innenwand des Innenzylinders (7) fest.

In einer alternativen Ausführungsform der Erfindung ist die Schicht oder Abstandshülse (5) mit den Kanälen und / oder Hohlräumen integraler Bestandteil der Welle oder Achse (11) und umschlingt die Achse oder Welle im Bereich der Buchse.

Gegenstand der Erfindung ist somit auch eine vorspannbare elastische zylindrische Buchse, welche folgende Merkmale aufweist bzw. umfasst: (i) einen äußeren zylindrischen Körper (8) und einen inneren zylindrischen Körper (7), welche beide durch einen elastische Schicht (4) mit einander verbunden sind, (ii) Schlitze (3) im äußeren und inneren Wandkörper, welche axial in Längsrichtung verteilt über die Oberflächen angeordnet sind, (iii) mindestens einen Verdrängungsraum (9) innerhalb des Buchsenkörpers, und (iv) eine durch das Auge der Buchse geführten Achse oder Welle (11), welche im Bereich der Buchse eine vorzugsweise elastische Abstandsschicht oder Abstandshülse (5) aufweist, welche mit Kanälen und / oder Hohlräumen, die zur Innenwand (7) der Buchse hin offen sind, ausgestattet ist, wodurch in bestimmten Bereichen mindestens ein Umströmungsraum (10) zwischen Buchsenkörper und Welle/Achse entsteht.

Bei Vorhandensein mehrere Umströmungsräume (10) können diese erfindungsgemäß durch Ringkanäle (27) miteinander verbunden sein.

In allen Fällen steht der Umströmungsraum (10) mit dem Verdrängungsraum (9) über Verbindungsöffnungen (25) in der Wand des inneren Zylinders und ggf. Verbindungsleitungen in Verbindung und wird über Leitungen (12) mit einem Druckmedium (13) versorgt, welches über besagte Öffnungen (25) aus dem Umströmungsraum (10) in den Verdrängungsraum (9) gepresst wird, so dass die elastische Schicht(en)(4) zusammengedrückt wird (werden), und die Buchse aufgrund der vorhandenen Schlitze (3) über ihren gesamten Umfang geweitet wird, wodurch eine gleichmäßige rotationssymmetrische Vorspannung der Buchse erzeugt wird.

In einer besonderen Ausführungsform werden die Öffnungen (25) nicht extra vorgesehen, sondern durch zumindest einen Teil der vorhandenen Schlitze (3) zur Verfügung gestellt, welche deren Funktion übernehmen.

Die Leitungen (12) können beispielsweise Bohrungen oder Hülsen in entsprechenden Bohrungen sein, welche vorzugsweise axial/radial im Inneren der Welle oder Achse (11) angeordnet sind. Sie können aber auch außerhalb der Welle/Achse geführt werden.

In einer weiteren Ausführungsform weisen die erfindungsgemäßen Buchsen mindestens eine Bohrung (19) quer durch den, bzw. radial zum Buchsenkörper, also auch durch die Elstomerschicht (4) auf, und stellt somit eine Verbindung zu den um die Buchse außen herum angeordneten Bestandteilen (z.B. Zahnkränze) des Planetengetriebes dar. Über eine derartige Öffnung (19) kann Schmiermittel (18) für die Räder des Getriebes zugeführt werden, welches primär über entsprechende Bohrungen (2, 14) in der Achse oder Welle (11) zur Verfügung gestellt werden soll. Diese Öffnungen (19) können unterbleiben, falls die Schmierung der besagten Planetenteile von außen ermöglicht wird. Selbstverständlich können auch hier Hülsen in den Bohrungen (2, 14) und (19) zum Einsatz kommen, was Vorteile in Bezug auf die geforderte Dichtigkeit hat. Es sollte bei der Dimensionierung der radialen Bohrung (19) beachtet werden, dass deren Durchmesser groß genug ist, dass die Bohrung sich bei Zusammenpressen der elastischen Schicht (4) durch Aufblähung des Verdrängungsraumes (9) nicht schließt.

Die erfindungsgemäßen Buchsen können auch mehrere Elastomerschichten (4) aufweisen, welche durch Trennwände/ Trennbleche (26) miteinander verbunden sind. Hier kommen insbesondere solche Buchsen in Frage, die ein oder zwei Trennbleche (26) mit zwei oder drei elastischen Schichten (4) aufweisen. Hierbei ist es auch möglich, dass der Verdrängungsraum (9) nicht nur zwischen Innenblech/Innenzylinder (7) und der anliegenden Elastomerschicht (4) angeordnet ist, sondern alternativ aber vorzugsweise zusätzlich hierzu in einem ausgewählten Bereich zwischen einem Trennblech bzw. Trennzylinder (26) und der darüber oder darunter befindlichen elastischen Schicht (4). Bei größeren und dickeren Buchsen kann somit eine leichtere und gleichmäßigere Vorspannung erreicht werden.

Die erfindungsgemäße vorspannbare elastische Buchse kann erfindungsgemäß auch aus Halbschalen oder Viertelschalen zusammengesetzt ist.

Gegenstand der Erfindung ist ferner ein Planetenlager, welches einen Planetenträger (15)(20)(21)(22) sowie einen beispielsweise kugelgelagerten Planetenzahnradkranz (16) umfasst sowie eine erfindungsgemäße elastische Buchse, wie beschrieben, in einem oder allen vorhandenen Planetenrädern oder auch ggf. der Sonne, aufweist.

Gegenstand der Erfindung ist weiterhin die Verwendung einer erfindungsgemäßen elastischen Buchse, eines Planetenlagers oder eines Planetengetriebes n Maschinen und Anlagen, welche Wellen-Naben-Verbindungen besitzen und keine oder nur geringe Momente übertragen, insbesondere in Anlagen mit hintereinander angeordneten Momenten-Lagern.

Gegenstand der Erfindung ist letztlich die Verwendung einer erfindungsgemäßen elastischen Buchse, eines Planetenlagers oder eines Planetengetriebes, wie beschrieben, für den Einsatz in Windkraftanlagen.

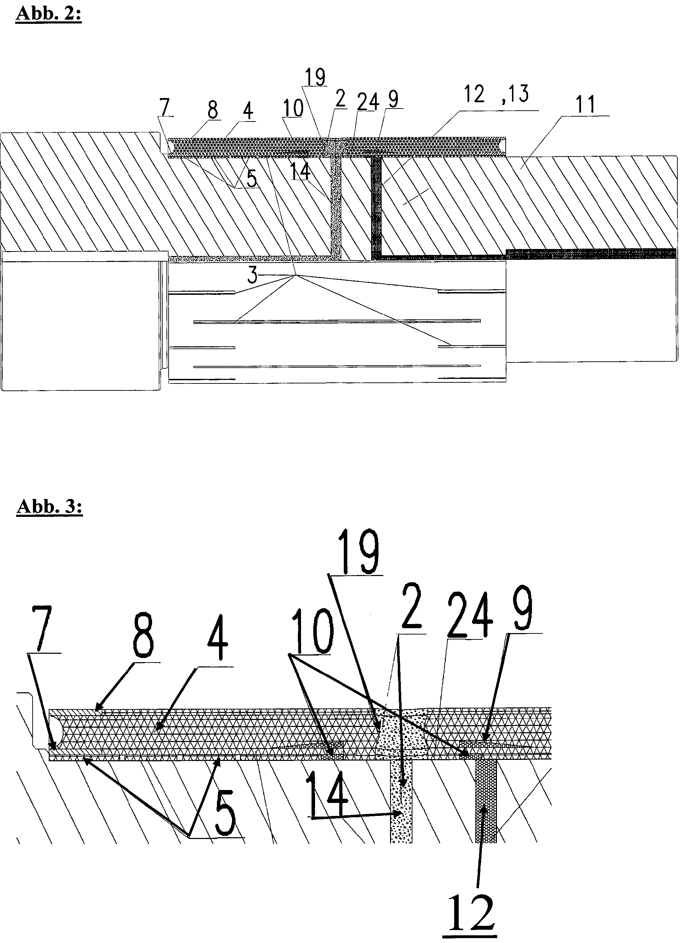

Die erfindungsgemäße Buchse besteht, wie bereits beschrieben, im Wesentlichen aus einem Innenblech (7) und einem Außenblech (8), welche durch eine elastische Schicht voneinander getrennt und miteinander verbunden sind. Solche Buchsen sind an sich bekannt. Neuartig ist, dass dabei, dass die Außenbleche als auch die Innenbleche vorzugsweise überlappende axial ausgerichtete Längsschlitze (3) aufweist. Dadurch ist es möglich die Bleche homogen über den Umfang zu dehnen. Die Schlitze können so wie in Abb. 2 dargestellt angeordnet sein. Sie können jedoch auch stärker überlappen und aus mehreren Einzelschlitzen über die Länge bestehen, so dass ein noch homogeneres Aufweiten der Buchse durch elastomere Verdichtung als dargestellt, erfolgen kann. Alternativ, besteht auch die Möglichkeit die Bleche mittels eines radial dehnbaren Gewebes oder Netzes verformbar zu gestalten, auch wenn dies technisch sehr aufwendig ist.

Bei den im Stand der Technik bekannten elastischen Buchsen, welche überwiegend als Halbschalen ausgelegt sind und für Dämpfungszwecke eingesetzt werden sollen, ist es nicht vorgesehen, die Außen-und Innenbleche weich und in radialer Richtung verformbar und dehnbar zu gestalten, da dies den anderen beschriebenen technischen Erfordernissen nicht gerecht würde. Somit kann bei diesen bekannten Varianten die Längenänderung nur an den Stößen der beiden Halbschalen erfolgen, wobei keine homogene Verformung über den Umfang gewährleistet ist.

Dies ist bei den erfindungsgemäßen Buchsen nicht mehr der Fall. Das Innen-und das Außenblech (7)(8) einer solchen Buchse kann aus einem Stück-(geschweißt) oder ein gewalztes Blech mit einem Stoß, oder auch aus zwei Halbschalen, ggf. auch aus vier Viertelschalen bestehen. Zwischen den beiden Blechen ist die Elastomerschicht (4) angeordnet. Diese durchdringt die Schlitze (3) der beiden Bleche. Das ist aus fertigungstechnischen Gründen vorteilhaft, auch wenn die Spalten/Schlitze nicht mit Elastomer verschlossen sein müssen.

Neuartig ist weiter, dass das Innenblech bzw. die Innenbuchse (7) einen Überzug bzw. eine Schicht in Form einer Hülse aufweist (5), welche(r) einerseits mit der inneren Wand der Innenbuchse und andrerseits mit der Welle oder Achse (11) in Verbindung steht. Diese(r) Überzug/Schicht (5) weist erfindungsgemäß Kanäle und /oder Hohlräume auf, die einen für ein Druckmittel (13) vorgesehenen Umströmungsraum (10) zwischen Buchse und Achse/Welle bilden. Vorzugsweise ist der/die Überzug/Schicht (5) mit der zur Asche (11) weisenden Wand (7) der Buchse festverbunden. Es ist jedoch auch prinzipielle möglich diese Schicht (5) mit dem entsprechenden Bereich der Achse/Welle (11) fest verbunden ist, oder auch mit beiden. Die Schicht besteht vorzugsweise aus elastischem Material oder weist zumindest an den Oberflächen ein elastisches Material aufweist, was günstig bei für die Verspannung der Buchse und die Dichtigkeit in Bezug auf das Druckmittel (13) ist.

Um die Buchse vorzuspannen wird durch die Druckbohrung (12), Druckmittel (13), beispielsweise eine (hydraulische) Flüssigkeit oder ein Gas eingepresst, die/das sich dann über die Kanäle/Hohlräume des Umströmungsraums (10) um den Umfang der Buchse verteilt und durch die Öffnungen (25) bzw. Schlitze (3) in den Blechen in den elastischen Verdrängungsraum (9) strömt. Dieser wird von der Flüssigkeit aufgeweitet und verdichtet, so dass das vorher dort vorhandene Elastomer verdrängt wird und damit die gesamte Elastomerschicht (4) vorspannt, wobei das Außenblech (8) nach außen gedrückt und das Innenblech (7) nach innen gedrückt wird. Somit erfolgt eine homogene Vorspannung der Buchse (1). Gleichzeitig wird Elastomer in die Bohrung für den Schmiermitteldurchlauf (2), eingepresst. Der Durchmesser der Bohrung (2) ist so gestaltet, dass trotz der entstehenden Engstelle (19) ein ausreichender Querschnitt für den Schmiermittelfluss (18) erhalten bleibt.

Der Hohlraum (9) entsteht, wie bereits erwähnt, dadurch, dass in diesem Bereich keine Verbindung zwischen dem Elastomer (4) und der Innenwand (7) besteht. Im nicht gefülltem Zustand liegt das Elastomer in diesem Bereich nur an. Sobald das Druckmittel (13) mit entsprechenden Druck eingefüllt wird, hebt sich das Elastomer (4) vom Blech bzw. der Wand ab und der entstehende Hohlraum wird mit der Flüssigkeit gefüllt.

Die Druckflüssigkeit (13) kann eine Flüssigkeit wie zum Beispiel Wasser oder Wasser/ Glykolmischungen, oder ein hydraulisches Öl oder Gas sein seien. Um auf Dauer die Dichtigkeit nicht gewährleisten zu müssen kann auch eine aushärtende Flüssigkeit verwendet werden, die nach Aushärtung im festen Zustand verbleibt, und somit für eine konstante Vorspannung sorgt.

Um die durch die Schmiermittel(Öl)- Bohrung (2) entstehende Ungleichmäßigkeit der Steifigkeit am Umfang auszugleichen, steht das Elastomer um Bereich (24) im nicht verspannten Zustand in Richtung Achse über, so dass in diesem Bereich eine Druckerhöhung durch die höhere Vorspannung erfolgt.

Die Erfindung betrifft ein Bauteil, welches zur elastischen Lagerung zwischen einer Welle oder einer Achse und einem die Welle umschlingenden Ring geeignet ist. In weiteren einer Ausführungsform der Erfindung ist der umschlingende Ring der Innenring eines-oder mehrerer Wälzlager.

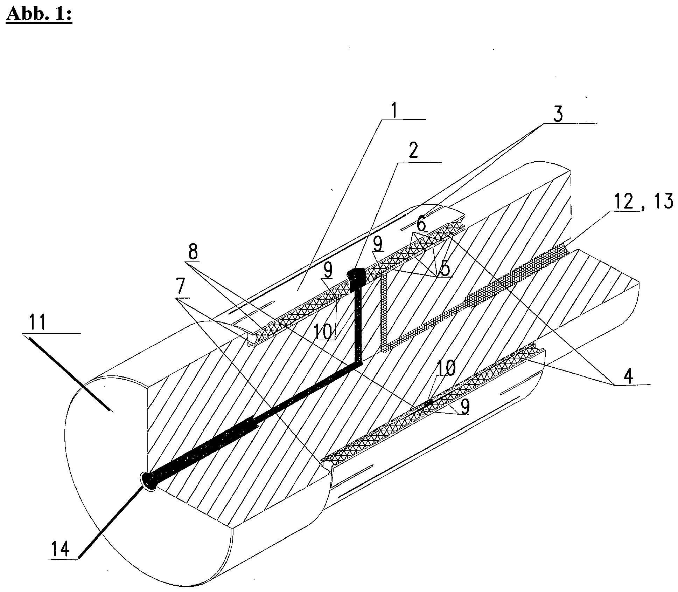

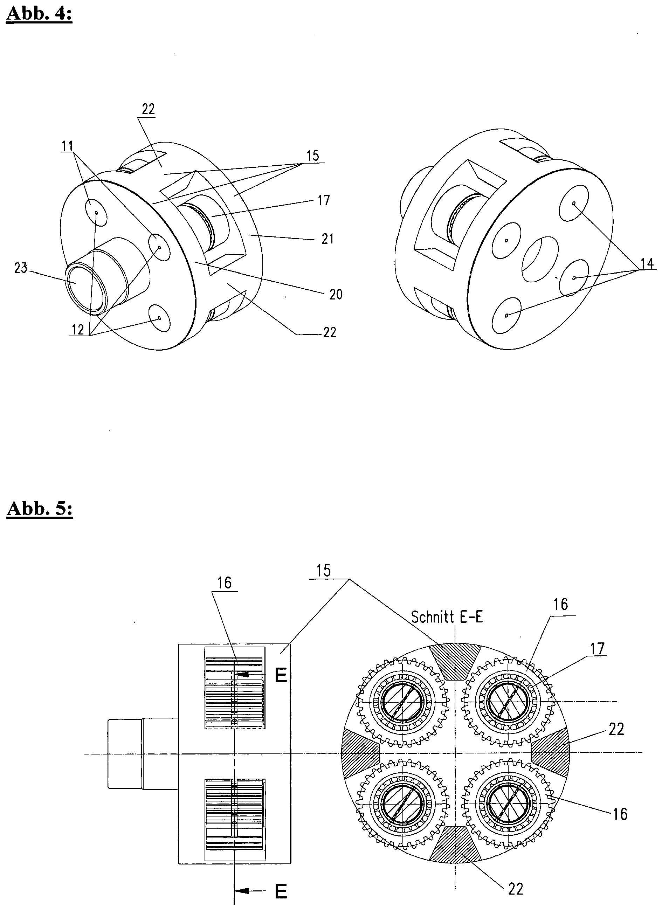

In einer weiteren Ausführungsform (Abb. 4) ist der umschlingende Ring der Innenring ein Planetenträger mit Achse (11) und Planetenlager (17). Der dünnere Durchmesser der Achse zeigt in Richtung der Eingangswelle (23). Somit ist es möglich, die Achse gemeinsam mit der Buchse (wie Darstellung in Abb. 1) von der gegenüberliegenden Seite in den Planetenträger und durch die Wälzlager (17) den Planeten-Zahnrädern (16) einzuschieben. Anschließend wird die Elastomerschicht nach dem oben beschriebenen System aufgeweitet und damit die elastische Verbindung zwischen Achse und Planetenlager hergestellt.

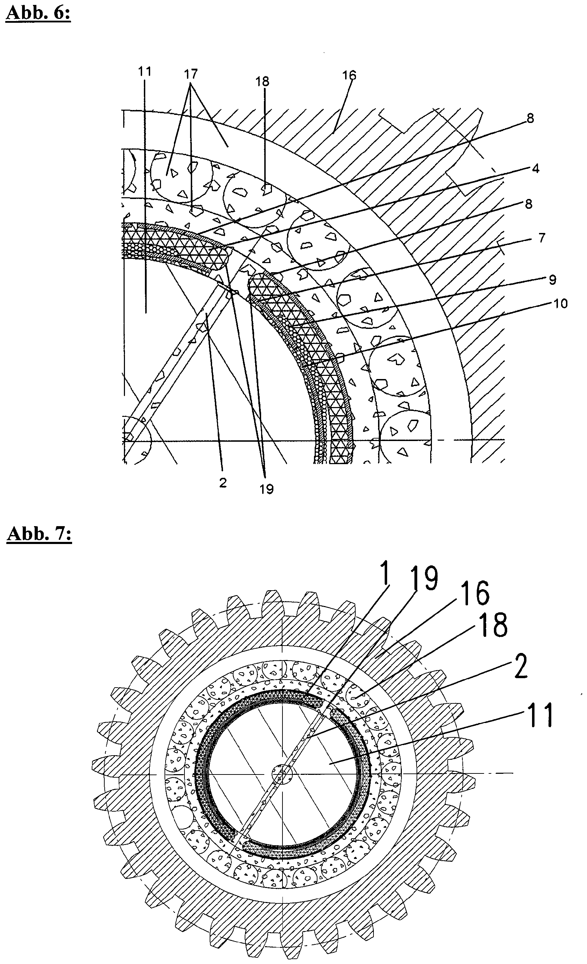

In Abb. 5 ist der Planetenträger zusammen mit Achse, Buchse, Planetenlager und Planetenzahnräder dargestellt. Abb. 6 zeigt ein Planetenrad; der Ausschnitt Abb. 7 zeigt die entsprechenden Details.

Die erfindungsgemäßen Buchsen sind im Maschinenbau für alle Wellen -Nabenverbindungen einsetzbar, welche vorzugsweise keine oder nur kleine Momente übertragen, so zum Beispiel hintereinander angeordnete Momenten-Lager. Bei dieser Anordnung überträgt ein von zwei Lagern die Axialkräfte, während das zweite Lager (Los-Lager) nur radiale Kräfte überträgt und gleichzeitig die Wellenbiegung kompensiert. Solche Elemente werden insbesondere in Windkraftanlagen mit Getriebe und ohne Getriebe gleichermaßen verwendet.

Vergleichbare Anwendung für die erdungsgemäßen Buchsen sind im gesamten Maschinenbau wie zum Beispiel Schiffsbau, Mühlenbau, Bahnbereich und im Kraftfahrzeugbereich vorhanden.

Im folgenden werden die im Text und in den Zeichnungen verwendeten Bezugsgrößen kurz erläutert:
- 1.: Buchse / Buchsenkörper
- 2.: Bohrung für Öldurchlauf
- 3.: Dehnungs- Aussparungen im Blech
- 4.: Elastische Schicht
- 5.: Abstützung / Abstandshülse zwischen Buchse und Achse
- 6.: Abstützrillen
- 7.: Inneres Blech / Innenwand / Innenzylinder / innerer Wandkörper
- 8.: Äußeres Blech / Außenwand / Außenzylinder / äußerer Wandkörper
- 9.: Elastischer Verdrängungsraum
- 10.: Umströmungsraum (Hohlräume / Kanäle)
- 11.: Achse / Welle
- 12.: Druckbohrung in Achse / Leitung für Druckmittel
- 13.: Druckflüssigkeit / Druckmittel
- 14.: Schmiermittellbohrung in Achse / Leitung für Schmiermittel
- 15.: Planetenträger
- 16.: Planeten Zahnräder
- 17.: Planetenlager
- 18.: Schmiermittel (Öl)
- 19.: Engstelle / Bohrung im Elastomer für Schmiermitteldurchfluss
- 20.: Planetenträger vordere Scheibe (Lasteinleitung)
- 21.: Planetenträger hintere Scheibe (eilt bei Drehmoment der vorderen Scheibe nach)
- 22.: Schmetterling (Verbindung zwischen Position 20 und 21)
- 23.: Eingangswellen Anschluss
- 24.: Dichtbereich um Schmiermittelbohrung
- 25.: Verbindung zwischen Verdrängungsraum und Umströmungsraum
- 26.: Mittelblech
- 27.: Verbindungsbohrung zwischen zwei Elastomer Verdrängungsräumen
- 28.: Fenster

Im folgenden werden Abbildungen kurz erläutert:
- Abb. 1: Buchse mit Achse, (dreidimensionaler dreiviertel Schnitt)
- Abb. 2: Buchse mit Achse, (dreiviertel Schnitt Seitenansicht)
- Abb. 3: Buchse mit Achse, Detailansicht
- Abb. 4: Planetenträger, dreidimensional (Planeten-Zahnräder nicht dargestellt)
- Abb. 5: Planetenträger mit Planetenräder, rechts im Schnitt dargestellt
- Abb. 6: Planetenrad im Schnitt
- Abb. 7: Planeten Rad, Detailansicht

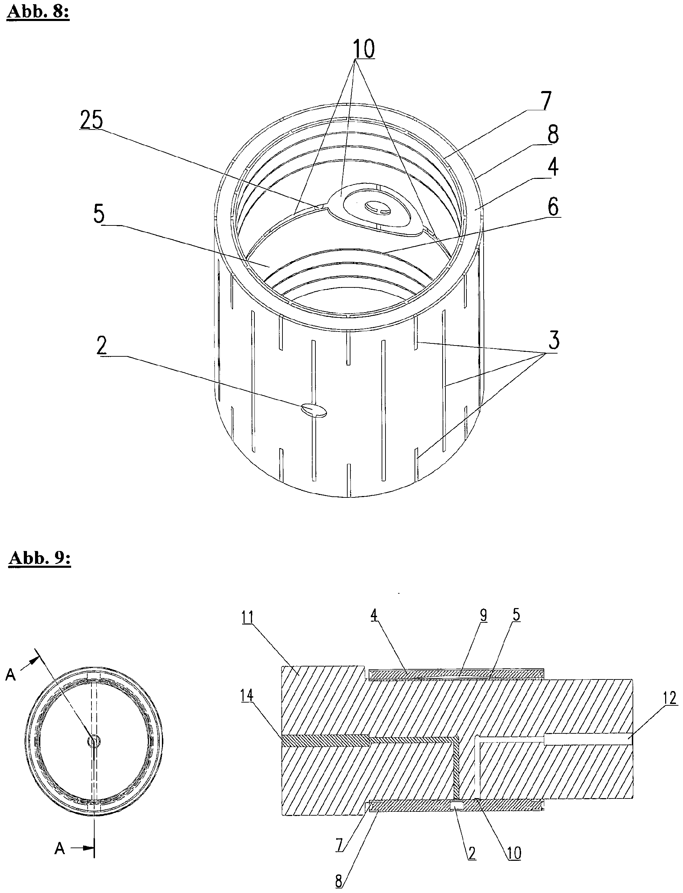

- Abb. 8: Buchse; einschichtig ohne Fenster
- Abb. 9: Detailschnitt Buchse; einschichtig ohne Fenster

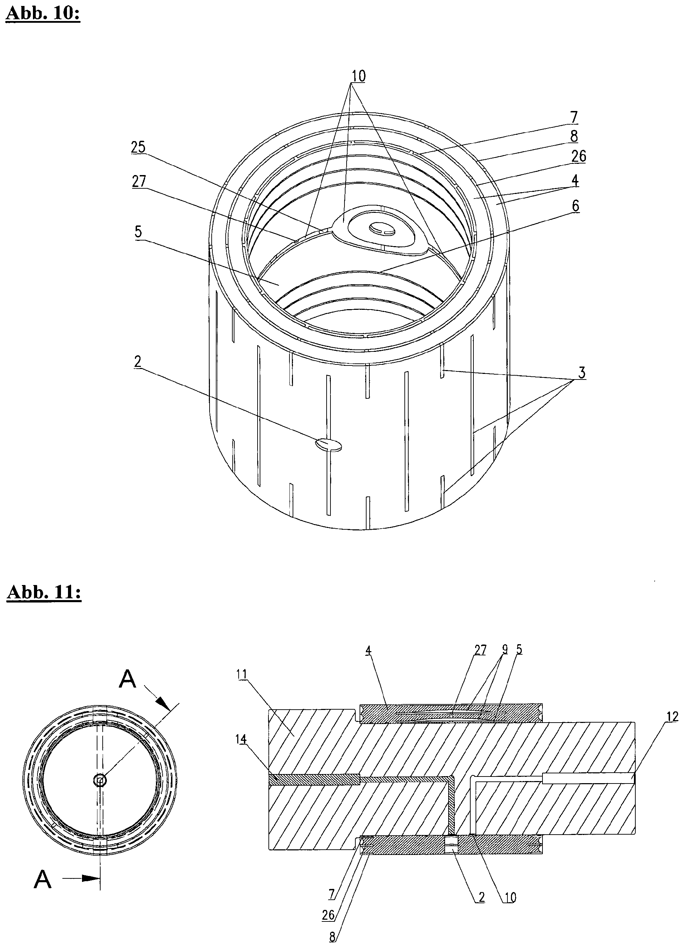

- Abb. 10: Buchse; mehrschichtig ohne Fenster
- Abb. 11: Detailschnitt Buchse; mehrschichtig ohne Fenster

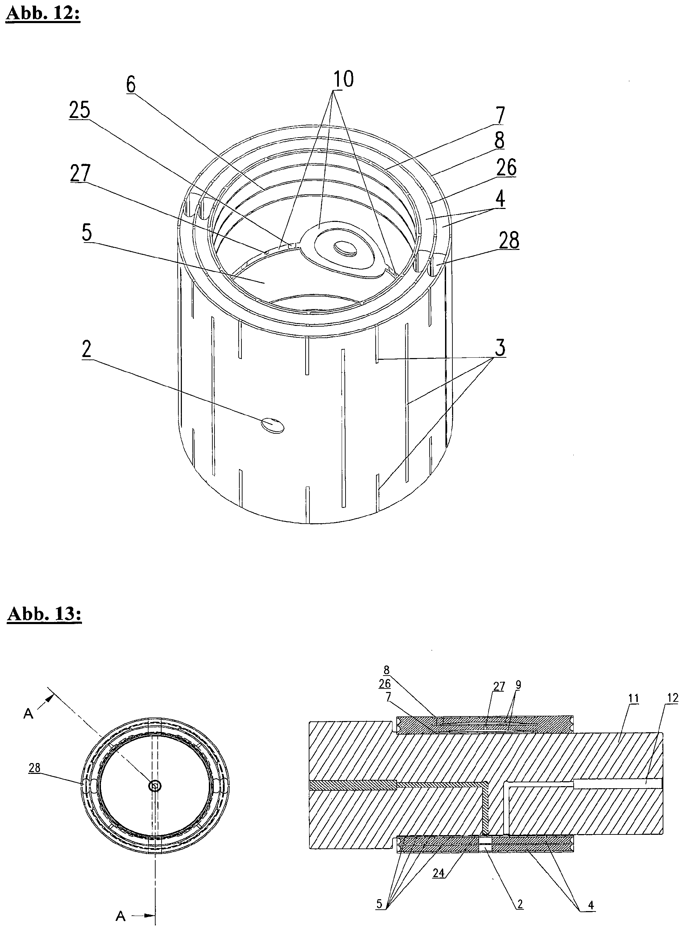

- Abb. 12: Buchse; mehrschichtig mit Fenster
- Abb. 13: Detailschnitt Buchse; mehrschichtig mit Fenster

## Patentansprüche

1. Vorspannbare elastische zur Aufnahme von Schwingungen befähigte zylindrische Buchse in Verbindung mit einer durch deren Auge geführten Welle oder Achse (11) eines Rad- oder Planetenlagers (17), umfassend
(a) einen äußeren Zylinder (8) und einen inneren Zylinder (7), welche beide durch einen elastische Schicht (4) mit einander verbunden sind und mit dieser den Buchsenkörper (1) um die besagte Welle oder Achse des Rad- oder Planetenlagers herum bilden,
(b) mindestens einen durch Druck aufweitbaren Verdrängungsraum (9) im Raum zwischen dem inneren Zylinder (7) und dem äußeren Zylinder (8), der dadurch gebildet wird, dass die elastische Schicht (4) schlitzähnliche Taschen innerhalb der elastischen Schicht aufweist oder in bestimmten Bereichen nicht mit der entsprechenden Wand des inneren und / oder äußeren Zylinders verbunden ist sondern nur lose aufliegt, und
(c) mindestens einen Umströmungsraum (10) außerhalb des Buchsenkörpers für eine Flüssigkeit oder ein Gas als Druckmedium (13), welcher mit dem Verdrängungsraum (9) innerhalb des Buchsenkörpers über mindestens eine Verbindungsöffnung (25) in der Wand des Innenzylinders (7) des Buchsenkörpers verbunden ist und mittels einer oder mehreren Leitungen (12) mit dem Druckmedium (13) versorgt wird, welches aus dem Umströmungsraum (10) in den sich weitenden Verdrängungsraum (9) gepresst wird, so dass die elastische Schicht (4) zusammengepresst und die Buchse aufgrund der vorhandenen Schlitze (3) über ihren gesamten Umfang geweitet wird, wodurch eine gleichmäßige rotationssymmetrische Vorspannung der Buchse erzeugt wird, **dadurch gekennzeichnet dass,**
(i) sowohl der äußere Zylinder (8) als auch der innere Zylinder (7) Schlitze (3) aufweisen welche axial in Längsrichtung verteilt über die Oberflächen angeordnet sind, und
(ii) der mindestens eine Umströmungsraum (10) außerhalb des Buchsenkörpers dadurch gebildet wird, dass sich zur Einhaltung eines Abstandes zwischen dem inneren Zylinder (7) des Buchsenkörpers (1) und der Welle oder Achse (11) passend eine starre oder elastische Trenn- oder Abstandshülse oder Schicht (5) befindet, welche Aussparungen, Kanäle oder Hohlräume aufweist, die in Verbindung stehen mit dem mindestens einen Verdrängungsraum (9) innerhalb des Buchsenkörpers zur Aufnahme des Druckmediums (13).

2. Vorspannbare elastische Buchse nach Anspruch 1, **dadurch gekennzeichnet dass** die Trenn- oder Abstandshülse oder Schicht (5) ein integraler Bestandteil des Buchsenkörpers (1) oder der Welle oder Achse (11) ist.

3. Vorspannbare elastische Buchse nach Anspruch 1 oder 2, **dadurch gekennzeichnet, dass** das Innere des-Buchsenkörpers (1) ein oder mehrere ganz oder teilweise durchgehende zylindrische Mittelbleche (26) mit zwei oder mehr elastischen Schichten (4) aufweist, wobei mindestens zwei der elastischen Schichten (4) mindestens einen Verdrängungsraum (9) aufweisen.

4. Vorspannbare elastische Buchse einem der Ansprüche 1 - 3, **dadurch gekennzeichnet, dass** zwei oder mehr Umströmungsräume (10) durch einen oder mehrere Ringkanäle (27) miteinander verbunden sind.

5. Vorspannbare elastische Buchse nach einem der Ansprüche 1 - 4, **dadurch gekennzeichnet, dass** eine oder mehrere der Verbindungsöffnungen (25) funktionell durch einen oder mehrere der besagten Schlitze (3) ersetzt wird.

6. Vorspannbare elastische Buchse nach einem der Ansprüche 1 - 5, **dadurch gekennzeichnet, dass** die mindestens eine Leitung (12) eine axiale Bohrung in der Welle oder Achse (11) ist, welche mindestens eine im wesentlichen radiale Abzweigung aufweist, die in einer Öffnung in der Innenwand des inneren Zylinders (7) endet.

7. Vorspannbare elastische Buchse nach Anspruch 6, **dadurch gekennzeichnet, dass** die Leitung (12) eine Hülse ist, die sich in den entsprechenden Bohrungen passend befindet und das Druckmittel (13) führt.

8. Vorspannbare elastische Buchse nach einem der Ansprüche 1 - 7, **dadurch gekennzeichnet, dass** der Buchsenkörper (1) mindestens eine Bohrung (19) aufweist, die quer durch den inneren Zylinder (7) und den äußeren Zylinder (8) führt und die um den Buchsenkörper außen angeordneten Rad- oder Planetenlager mit Schmiermittel (18) versorgt, welches über mindestens eine Leitung oder Bohrung (14) (2) in der Achse oder Welle (11) geliefert wird.

9. Vorspannbare elastische Buchse nach Anspruch 8, **dadurch gekennzeichnet, dass** die Bohrungen (19) und/oder (14) (2) eine passende Hülse aufweisen, durch die das Schmiermittel geführt wird.

10. Planetenlager umfassend einen Planetenträger (15)(20)(21)(22) sowie einen Planetenzahnradkranz (16), umfassend mindestens eine elastische Buchse nach einem der Ansprüche 1 - 9.

11. Planetengetriebe, umfassend mindestens ein Planetenlager nach Anspruch 10.

12. Verwendung einer elastischen Buchse, eines Planetenlagers oder eines Planetengetriebes gemäß einem der Ansprüche 1 - 11 in Maschinen und Anlagen, welche Wellen-Naben-Verbindungen besitzen und keine oder nur geringe Momente übertragen.

13. Verwendung einer elastischen Buchse, eines Planetenlagers oder eines Planetengetriebes nach Anspruch 12 in Anlagen mit hintereinander angeordneten Momenten-Lagern.

14. Verwendung einer elastischen Buchse, eines Planetenlagers oder eines Planetengetriebes nach Anspruch 12 oder 13 für den Einsatz in Windkraftanlagen.

15. Windkraftanlage enthaltend mindestens eine elastische Buchse, ein Planetenlager oder ein Planetengetriebe nach einem der Ansprüche 1 - 11.

## Claims

1. Pretensionable elastic cylindrical bushing which is capable of absorbing vibrations in combination with a shaft or axle (11) of a wheel bearing or planetary bearing (17) passed through its eye, comprising
(a) an outer cylinder (8) and an inner cylinder (7), both of which are connected to one another by an elastic layer (4) and form with the latter the bushing body (1) around the said shaft or axle of the wheel bearing or planetary bearing,
(b) at least one pressure-expandable displacement space (9) in the space between the inner cylinder (7) and the outer cylinder (8), which is formed by the elastic layer (4) having slot-like pockets within the elastic layer or not being connected to the corresponding wall of the inner and/or outer cylinder in certain areas, but instead only lying loosely, and
(c) at least one bypass space (10) outside the bushing body for a liquid or gas as pressure medium (13), which is connected to the displacement space (9) inside the bushing body via at least one connection opening (25) in the wall of the inner cylinder (7) of the bushing body and is supplied with the pressure medium (13) by means of one or more lines (12), the pressure medium being forced out of the bypass space (10) into the widening displacement space (9), so that the elastic layer (4) is compressed and the bushing is widened over its entire periphery owing to the slots (3) present, generating a uniform rotationally symmetrical pretensioning of the bushing, **characterised in that**
(i) both the outer cylinder (8) and the inner cylinder (7) have slots (3) arranged axially in the longitudinal direction distributed over the surfaces, and
(ii) the at least one bypass space (10) outside the bushing body is formed by a rigid or elastic separation or spacer sleeve or layer (5), which has cut-outs, channels or cavities which are connected to the at least one displacement space (9) inside the bushing body for accommodation of the pressure medium (13), being located with a close fit between the inner cylinder (7) of the bushing body (1) and the shaft or axle (11) in order to maintain a separation.

2. Pretensionable elastic bushing according to Claim 1, **characterised in that** the separation or spacer sleeve or layer (5) is an integral constituent of the bushing body (1) or the shaft or axle (11).

3. Pretensionable elastic bushing according to Claim 1 or 2, **characterised in that** the interior of the bushing body (1) has one or more fully or partly continuous cylindrical central metal sheets (26) with two or more elastic layers (4), where at least two of the elastic layers (4) have at least one displacement space (9).

4. Pretensionable elastic bushing according to one of Claims 1 - 3, **characterised in that** two or more bypass spaces (10) are connected to one another by one or more ring channels (27).

5. Pretensionable elastic bushing according to one of Claims 1 - 4, **characterised in that** one or more of the connection openings (25) is functionally replaced by one or more of the said slots (3).

6. Pretensionable elastic bushing according to one of Claims 1 - 5, **characterised in that** the at least one line (12) is an axial hole in the shaft or axle (11), which has at least one essentially radial branch which terminates in an opening in the inside wall of the inner cylinder (7).

7. Pretensionable elastic bushing according to Claim 6, **characterised in that** the line (12) is a sleeve which is located with a close fit in the corresponding holes and conveys the pressure medium (13).

8. Pretensionable elastic bushing according to one of Claims 1 - 7, **characterised in that** the bushing body (1) has at least one hole (19) which runs transversely through the inner cylinder (7) and the outer cylinder (8) and supplies the wheel bearings or planetary bearings arranged externally around the bushing body with lubricant (18), which is supplied via at least one line or hole (14) (2) in the axle or shaft (11).

9. Pretensionable elastic bushing according to Claim 8, **characterised in that** the holes (19) and/or (14) (2) have a matching sleeve, through which the lubricant is conveyed.

10. Planetary bearing comprising a planet carrier (15)(20)(21)(22) and a planet gear ring (16), comprising at least one elastic bushing according to one of Claims 1 - 9.

11. Planetary gearbox comprising at least one planetary bearing according to Claim 10.

12. Use of an elastic bushing, a planetary bearing or a planetary gearbox according to one of Claims 1 - 11 in machines and installations which have shaft-hub connections and transmit no or only low moments.

13. Use of an elastic bushing, a planetary bearing or a planetary gearbox according to Claim 12 in installations having slew bearings arranged one behind the other.

14. Use of an elastic bushing, planetary bearing or planetary gearbox according to Claim 12 or 13 for use in wind turbines.

15. Wind turbine containing at least one elastic bushing, planetary bearing or planetary gearbox according to one of Claims 1 - 11.

## Revendications

1. Douille cylindrique élastique pouvant être soumise à pré-tension, laquelle présente la capacité d'absorber des vibrations en combinaison avec un arbre ou un essieu/axe (11) d'un palier de roue ou d'un palier planétaire (17) qui est passé au travers de son œil, comprenant
(a) un cylindre externe (8) et un cylindre interne (7), dont les deux sont connectés l'un à l'autre au moyen d'une couche élastique (4) et forment avec cette dernière le corps de douille (1) autour dudit arbre ou dudit essieu/axe du palier de roue ou du palier planétaire,
(b) au moins un espace de déplacement pouvant être agrandi par pression (9) à l'intérieur de l'espace entre le cylindre interne (7) et le cylindre externe (8), lequel est formé au moyen de la couche élastique (4) et comporte des poches en forme de fente à l'intérieur de la couche élastique ou n'est pas connecté à la paroi correspondante du cylindre interne et/ou externe dans certaines zones, mais, en lieu et place, s'étend de manière lâche, et
(c) au moins un espace de dérivation (10) à l'extérieur du corps de douille pour un liquide ou un gaz en tant que milieu de pression (13), lequel est connecté à l'espace de déplacement (9) à l'intérieur du corps de douille via au moins une ouverture de connexion (25) qui est ménagée dans la paroi du cylindre interne (7) du corps de douille et lequel est alimenté par le milieu de pression (13) au moyen d'une ou de plusieurs ligne(s) (12), le milieu de pression étant forcé hors de l'espace de dérivation (10) à l'intérieur de l'espace de déplacement s'élargissant (9), de telle sorte que la couche élastique (4) soit comprimée et que la douille soit élargie sur la totalité de sa périphérie grâce aux fentes (3) qui sont présentes, d'où la réalisation d'une mise sous pré-tension symétrique en rotation uniforme de la douille, **caractérisée en ce que**
(i) le cylindre externe (8) et le cylindre interne (7) comportent tous deux des fentes (3) qui sont agencées axialement dans la direction longitudinale et qui sont distribuées au-dessus des surfaces, et
(ii) l'au moins un espace de dérivation (10) à l'extérieur du corps de douille est formé par une séparation ou une gaine ou couche d'espaceur rigide ou élastique (5), laquelle comporte des découpes, des canaux ou des cavités qui sont connecté(e)s à l'au moins un espace de déplacement (9) à l'intérieur du corps de douille pour la réception du milieu de pression (13), lequel est positionné selon un ajustement serré entre le cylindre interne (7) du corps de douille (1) et l'arbre ou l'essieu/axe (11) afin de maintenir une séparation.

2. Douille élastique pouvant être soumise à pré-tension selon la revendication 1, **caractérisée en ce que** la séparation ou la gaine ou couche d'espaceur (5) est un constituant d'un seul tenant du corps de douille (1) ou de l'arbre ou de l'essieu/axe (11).

3. Douille élastique pouvant être soumise à pré-tension selon la revendication 1 ou 2, **caractérisée en ce que** l'intérieur du corps de douille (1) comporte une ou plusieurs tôle(s) en métal centrale(s) cylindrique(s) complètement ou partiellement continue(s) (26) qui est/sont munie(s) de deux couches élastiques ou plus (4), où au moins deux des couches élastiques (4) comportent au moins un espace de déplacement (9).

4. Douille élastique pouvant être soumise à pré-tension selon l'une des revendications 1 - 3, **caractérisée en ce que** deux espaces de dérivation ou plus (10) sont connectés l'un à l'autre ou les uns aux autres par un canal ou plusieurs canaux annulaire(s) (27).

5. Douille élastique pouvant être soumise à pré-tension selon l'une des revendications 1 - 4, **caractérisée en ce qu'**une ou plusieurs des ouvertures de connexion (25) est/sont remplacée(s) fonctionnellement par une ou plusieurs desdites fentes (3).

6. Douille élastique pouvant être soumise à pré-tension selon l'une des revendications 1 - 5, **caractérisée en ce que** l'au moins une ligne (12) est un trou axial qui est ménagé dans l'arbre ou l'essieu/axe (11), lequel comporte au moins une branche essentiellement radiale qui se termine à l'intérieure d'une ouverture qui est ménagée dans la paroi intérieure du cylindre interne (7).

7. Douille élastique pouvant être soumise à pré-tension selon la revendication 6, **caractérisée en ce que** la ligne (12) est une gaine qui est localisée selon un ajustement serré dans les trous correspondants et qui convoie le milieu de pression (13).

8. Douille élastique pouvant être soumise à pré-tension selon l'une des revendications 1 - 7, **caractérisée en ce que** le corps de douille (1) comporte au moins un trou (19) qui court transversalement au travers du cylindre interne (7) et du cylindre externe (8) et qui alimente les paliers de roue ou les paliers planétaires qui sont agencés de façon externe autour du corps de douille avec un lubrifiant (18), lequel est alimenté via au moins une ligne ou un trou (14) (2) dans l'essieu/axe ou l'arbre (11).

9. Douille élastique pouvant être soumise à pré-tension selon la revendication 8, **caractérisée en ce que** les trous (19) et/ou les lignes ou trous (14) (2) comportent une gaine associée par appariement, au travers de laquelle le lubrifiant est convoyé.

10. Palier planétaire comprenant un support planétaire à fonction de porte-satellites (15)(20)(21)(22) et une couronne d'engrenage planétaire à fonction de satellite (16), comprenant au moins une douille élastique selon l'une des revendications 1 - 9.

11. Boîte de vitesses à trains planétaires comprenant au moins un palier planétaire selon la revendication 10.

12. Utilisation d'une douille élastique, d'un palier planétaire ou d'une boîte de vitesses à trains planétaires selon l'une des revendications 1 - 11 dans les machines et les installations qui comportent des connexions arbre-moyeu et qui ne transmettent aucun moment ou qui transmettent seulement des moments faibles.

13. Utilisation d'une douille élastique, d'un palier planétaire ou d'une boîte de vitesses à trains planétaires selon la revendication 12 dans les installations qui comportent des paliers oscillants qui sont agencés les uns derrière les autres.

14. Utilisation d'une douille élastique, d'un palier planétaire ou d'une boîte de vitesses à trains planétaires selon la revendication 12 ou 13 pour une utilisation dans les éoliennes.

15. Eolienne contenant au moins une douille élastique, un palier planétaire ou une boîte de vitesses à trains planétaires selon l'une des revendications 1 - 11.
